# EUROPÄISCHE PATENTSCHRIFT

(11) **EP 1 311 809 B1**
(45) Veröffentlichungstag und Bekanntmachung des Hinweises auf die Patenterteilung: **29.12.2010**
(21) Anmeldenummer: 01957694.1
(22) Anmeldetag: 23.06.2001
(51) Int. Cl.: G01G 19/414, B60N 2/00

(54) **SYSTEM UND VERFAHREN ZUR VERMESSUNG EINER SITZMATTE FÜR EINEN FAHRZEUGSITZ**
SYSTEM AND METHOD FOR MEASURING A SEAT MAT FOR A VEHICLE SEAT
SYSTEME ET DISPOSITIF POUR MESURER UN COUSSIN DE SIEGE DE VEHICULE

(30) Priorität: 16.08.2000 DE 10039774
(43) Veröffentlichungstag der Anmeldung: 21.05.2003
(73) Patentinhaber: ROBERT BOSCH GMBH, 70442 Stuttgart (DE)
(72) Erfinder: SIEFERT, Dieter, 91572 Bechhofen (DE); WOLF, Rene, 71701 Schwieberdingen (DE); MAIER, Hermann, 71706 Markgroeningen (DE); HENNE, Ralf, 74343 Sachsenheim (DE)
(86) Internationale Anmeldenummer: PCT/DE2001/002321
(87) Internationale Veröffentlichungsnummer: WO 2002/014808

(56) Entgegenhaltungen:
- WO-A-00/00370
- WO-A-99/39168
- DE-A- 4 403 073

## Beschreibung

### Stand der Technik

Die Erfindung geht aus von einem System aus einer Messvorrichtung und einer Sitzmatte bzw. von einem Verfahren zur Vermessung einer Sitzmatte für einen Fahrzeugsitz nach der Gattung der unabhängigen Patentansprüche.

Es ist bereits bekannt, dass Sitzmatten für einen Fahrzeugsitz entweder mit einem Stößel mit einem vorgegebenen Gewicht oder in einer Überdruckkammer bezüglich ihrer Funktion und zur Aufnahmen von Messwerten vermessen werden. Der Stößel weist ein bestimmtes Gewicht auf, beispielsweise 400 g, während bei der Überdruckkammer durch eine Änderung des Überdrucks in einer Druckkammer verschiedene Messwerte erzeugbar sind. Die Druckkammer hat ungefähr die Größe der Sitzmatte und ist geeignet um einen vorgegebenen Überdruck zu widerstehen.

Aus US 4,833,614 ist ein Luftstützensystem für einen Sitz eines Fahrzeugs bekannt. Dabei wird eine Pumpe verwendet, um die Luftstütze aufzupumpen oder zu belüften. Weiterhin wird ein Drucksensor für die Messung des Luftdrucks in der Luftstütze verwendet. Aus WO 00/00370 A ist eine Sitzmatte unter Anschluss an eine Vakuumpumpe genannt. Aus WO 99/39168 A ist ein Drucksensor als Sitzmatte bekannt. Aus DE 44 03 073 A1 ist das Aufblasen und Entlüften von Sitzpolstern bekannt.

### Vorteile der Erfindung

Das erfindungsgemäße System bzw. das erfindungsgemäße Verfahren zur Vermessung einer Sitzmatte für einen Fahrzeugsitz mit den Merkmalen der unabhängigen Patentansprüche haben dem gegenüber den Vorteil, dass durch die Verwendung eines Unterdrucks in der Sitzmatte ein gut einstellbarer Differenzdruck zwischen äußeren Luftdruck und diesem Unterdruck zu einer genauen Einstellung der Gewichtsbelastung führt. Insbesondere ist damit das erfindungsgemäße Verfahren bzw. die erfindungsgemäße Messvorrichtung unabhängig von äußeren Luftdruck, da tatsächlich nur die Differenz zur Einstellung des Unterdrucks verwendet wird.

Da ein Unterdruck in der Sitzmatte verwendet wird, ist dass erfindungsgemäße Verfahren sicherer, da keine Überdruckkammer notwendig ist, welche durch einen ungeregelten Überdruck bersten kann. Da keine Druckkammer notwendig ist, kann die erfindungsgemäße Messvorrichtung mit der Sitzmatte vorteilhafter Weise in einen Klimaschrank gebracht werden, um eine temperaturabhängige Messung durchzuführen. Dadurch dass keine Überdruckkammer für die Sitzmatte notwendig ist, ist die Messvorrichtung leicht transportabel und damit gut handhabbar.

Durch die in den abhängigen Ansprüchen aufgeführten Maßnahmen Weiterbildungen sind vorteilhafte Verbesserungen des in den unabhängigen Patentansprüchen angegebenen systems bzw. des Verfahrens zur Vermessung einer Sitzmatte für einen Fahrzeugsitz möglich.

Besonders vorteilhaft ist, dass der Regler elektronisch ausgeführt ist, so dass eine Automatisierbarkeit gegeben ist. Eine mechanische Ausführung des Reglers führt zu einer flexiblen Handhabung des erfindungsgemäßen Verfahrens.

### Zeichnung

Ausführungsbeispiele der Erfindung sind in der Zeichnung dargestellt und werden in der nachfolgenden Beschreibung näher erläutert.

Es zeigt:
Figur 1 eine schematische Darstellung der Sitzmatte im Querschnitt mit angeschlossener Messvorrichtung,
Figur 2 ein Blockschaltbild der Sitzmatte und der angeschlossenen Messvorrichtung mit Auswertung,
Figur 3 das erfindungsgemäße Verfahren als Flußdiagramm.

### Beschreibung

Sitzmatten für Fahrzeugsitze weisen druckabhängige Widerstände auf, um beispielsweise einem Rückhaltesystem in einem Fahrzeug anzuzeigen, wer oder was auf dem jeweiligen Sitz sitzt. Insbesondere ist damit eine Klassifizierung der Personen, Größe und Gewicht, und eine Unterscheidung zwischen Personen und Gegenständen möglich. Dazu werden insbesondere auch Sitzprofile verwendet.

Die durckabhängigen Widerstände sind die sogenannten FSR-(Force Sensing Resistor = kraftsensierender Widerstand) Sensoren. Die FSR-Sensoren bestehen aus zwei Substraten, auf die drucksensitive Filme und Elektroden aufgebracht sind. Wenn eine Kraft auf diesen FSR-Sensor ausgeübt wird, sinkt sein elektrischer Widerstand. Dieses Absenken ist eine monotone Funktion der angewendeten Kraft. In einer Sitzmatte sind mehrere Sensoren untergebracht deren Widerstände vermessen werden und in digitale Werte umgesetzt werden.

Nach der Herstellung der Matten ist eine Fuktionsprüfung, bzw. eine messtechnische Charakterisierung der Sensoren in der Sitzmatte notwendig. Erfindungsgemäß wird daher eine Verfahren und eine Messvorrichtung zur Vermessung der Sitzmatte für ein Fahrzeugsitz verwendet, die einen Unterdruck in der Sitzmatte verwenden, wobei ein Differenzdruck zwischen diesem Unterdruck und dem Luftdruck der Umgebung eingestellt wird. Dieser Differenzdruck wird durch einen Regler geregelt, der entweder elektronisch oder mechanisch ausgeführt ist. Die Messwerte werden in Abhängigkeit von dem durch den Unterdruck hervorgerufenen Anpressdruck angegeben.

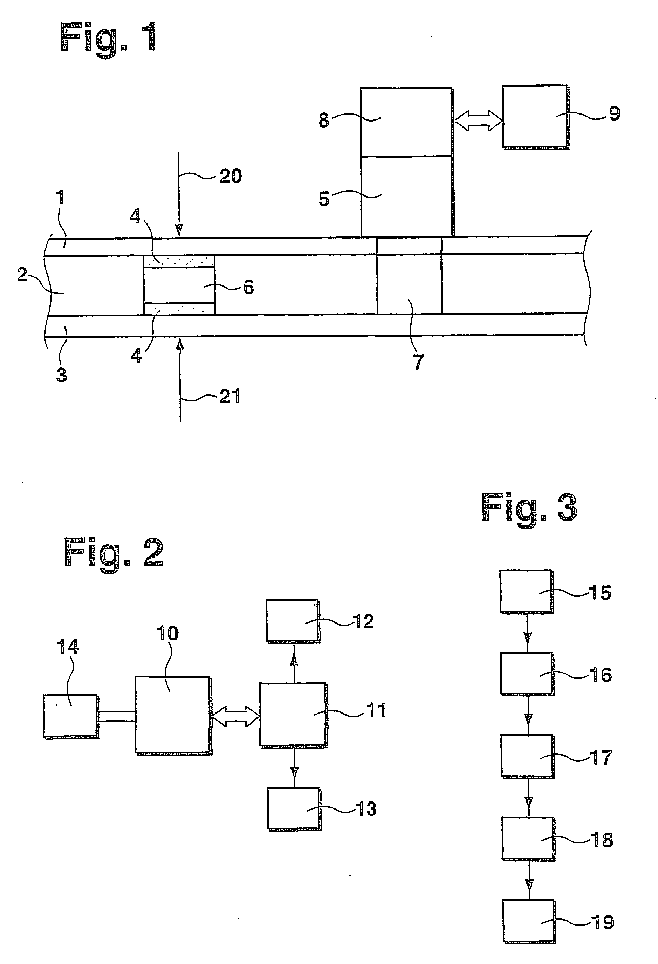

In Figur 1 ist schematisch ein Querschnitt einer Sitzmatte mit einer angeschlossenen erfindungsgemäßen Messvorrichtung dargestellt. Die Sitzmatte weist eine Folie 1, eine Kunststoffschicht 2 als Abstandhalter und eine zweite Folie 3 auf, wobei an den Folien 1 und 3 die FSR-Sensoren 4 aufgeklebt sind. Darüber hinaus sind auf den Folien 1 und 3 Elektroden und Leitungen, hier nicht dargestellt, angebracht, um die Messwerte der FSR-Sensoren 4 zu erfassen. In der Sitzmatte sind Hohlräume 6 angebracht, um elastisch auf einen aufgebrachten Druck zu reagieren. Da bei einem Gewicht auf den Fahrzeugsitz mit der Sitzmatte die Luft in Hohlräumen 6 entweichen sollen, um elastisch auf diesem Druck zu reagieren, weist die Sitzmatte einen Entlüftungskanal 7 auf, an den die erfindungsgemäße Messvorrichtung angeschlossen ist.

Auf der Sitzmatte ist daher eine Sauganschluss 5 über dem Entlüftungskanal 7 abgebracht. An den Sauanschluß 5 schließt sich auf der anderen Seite eine Pumpe 9 an, die über einen Regler 8 bezüglich des Differenzdruckes zwischen dem Unterdruck in der Sitzmatte und dem äußeren Luftdruck regelt. Der Regler 8 mißt das Vakuum und den äußeren Luftdruck und regelt die Pumpe entsprechend einem am Regler 8 eingestellten Wert. Der Regler 8 ist hier zwischen dem Sauganschluß 5 und der Pumpe 9 angeordnet. Durch die Pfeile 20 und 21 ist die Kraft des äußern Luftdrucks angezeigt, die zum Tragen kommt wenn ein Unterdruck in der Sitzmatte erzeugt wird. Hier sind die Aufnahmevorrichtung für die Messwerte der FSR-Sensoren 4 und die an die Aufnahmevorrichtung angeschlossenen Speicher bzw. Ausgabevorrichtung nicht dargestellt.

Die gemessenen Messwerte werden mit einer abgespeicherten Tabelle, die sich dann in einem Steuergerät im Fahrzeug befindet, in Gewichtswerte übersetzt. Daraus kann dann ein Prozessor in dem Steuergerät berechnen, wie schwer und wie groß die Person sein wird, wobei zusätzlich das Sitzprofil verwendet wird. Dies ist für die Einstellung eines Airbags notwendig, um Verletzungen von Personen beim Auslösen eines Airbags zu vermeiden.

In Figur 2 ist die Sitzmatte mit der angeschlossenen Messvorrichtung als Blockschaltbild dargestellt. Eine Sitzmatte 10 wird über die Pumpe mit einem Regler und einem Sauganschluß, zusammengefaßt im Block 14, abgepumpt, um damit eine Unterdruck in der Sitzmatte 10 zu erzeugen.

Elektrische Anschlüsse der Sitzmatte 10 führen zu einer Aufnahmevorrichtung 11 für die Messwerte. Ein erster Datenausgang der Aufnahmevorrichtung 11 für die Messwerte führt zu einer Anzeige 12 und ein zweiter Datenausgang der Aufnahmevorrichtung 11 zu einem Speicher 13.

Die geregelte Pumpeneinheit 14 pumpt die Sitzmatte 10 ab, um den Unterdruck zu erzeugen, wobei der Unterdruck mittels eines Differenzdruck zwischen dem Unterdruck und dem äußeren Luftdruck eingestellt wird. In Abhängigkeit von diesem Differenzdruck geben die FSR-Sensoren 4 in der Sitzmatte 10 unterschiedliche Widerstandswerte, die durch die Aufnahmevorrichtung 11 gemessen werden. Dafür legt die Aufnahmevorrichtung 11 einer Spannung an den elektrischen Anschluß der elektrischen Sitzmatte 10 an, oder sie treibt einen Strom durch den elektrischen Anschluß, um letztlich den Widerstand der Sitzmatte 10 zu ermitteln. Diese Widerstandswerte werden dann in der Aufnahmevorrichtung 11 digitalisiert und ggf. weiterverarbeitet, um diese Werte dann mittels der Anzeige 12 anzuzeigen und/oder im Speicher 13 abzuleben.

Weiterhin ist es möglich, dass an die Aufnahmevorrichtung 11 ein Kennlinienscheiber angeschlossen wird, um direkt in Abhängigkeit von dem erzeugten Differenzdruck die gemessenen Widerstandswerte der FSR-Sensoren 4 auszugeben. Dies liefert eine Überprüfung der Funktionsfähigkeit der Sitzmatte 10. Die erfindungsgemäße Messvorrichtung besteht daher aus dem Sauganschluß 5, der Pumpe 9, dem Regler 8, der Aufnahmervorrichtung 11, der Anzeige 12 und dem Speicher 13.

Soll die Kennlinie in Abhängigkeit von dem Differenzdruck ausgegeben werden, ist eine Verbindung zwischen dem Regler 8 und der Aufnahmevorrichtung 11 vorzusehen.

In Figur 3 ist als Flußdiagramm das erfindungsgemäße Verfahren zur Vermessung der Sitzmatte 10 für einen Fahrzeugsitz dargestellt. In Verfahrensschritt 15 wird die erfindungsgemäße Messvorrichtung mit der Sitzmatte 10 verbunden. In Verfahrensschritt 16 wird mittels des Sauganschluß 5, der Pumpe 9 und dem Regler 8 ein Differenzdruck zwischen dem Inneren der Sitzmatte 10 und dem äußeren Luftdruck eingestellt, wobei in der Sitzmatte 10 ein Unterdruck erzeugt wird. Dazu pumpt die geregelte Pumpeneinheit 14 die Luftkanäle der Sitzmatte 10 leer.

In Verfahrensschritt 17 wird also dieser Differenzdruck eingestellt, um dann in Verfahrensschritt 18 die entsprechenden Messwerte mittels der Aufnahmevorrichtung 11 aufzunehmen und ggf. mit der Anzeige 11 darzustellen oder im Speicher 13 für eine spätere Bearbeitung abzuspeichern. In Verfahrensschritt 19 wird diese Ausgabe der Kennlinie vorgenommen.

Es ist weiterhin möglich, dass die erfindungsgemäße Messvorrichtung mit der Sitzmatte 10 in einem Klimaschrank transportiert wird um dort eine temperaturabhängige Messung durchzuführen.

## Patentansprüche

1. System aus einer Messvorrichtung zur Vermessung einer Sitzmatte eines Fahrzeugsitzes und einer Sitzmatte (10), wobei die Sitzmatte (10) zwei Folien (1, 3) mit Drucksensoren (4), eine Kunststoffschicht (2) zwischen den Folien (1, 3), einen Entlüftungskanal (7) und wenigstens einen Hohlraum (6) aufweist, wobei die Messvorrichtung einen Sauganschluss (5) zum Anschluss an den Entlüftungskanal (7), eine Pumpe (9) zum Erzeugen eines Unterdrucks in der Sitzmatte (10), einen Regler (8) zur Einstellung eines Differenzdrucks zwischen dem Unterdruck in der Sitzmatte (10) und dem äußeren Luftdruck, eine Aufnahmevorrichtung (11) für Messwerte von den Drucksensoren (4) und Mittel (12, 13) zur optischen Ausgabe und/oder zum Speichern der Messwerte aufweist, wobei durch den Differenzdruck eine genaue Einstellung einer Gewichtsbelastung auf die Sitzmatte erfolgt.

2. Messvorrichtung nach Anspruch 1, **dadurch gekennzeichnet, dass** der Regler (8) als ein elektronischer Regler ausgebildet ist.

3. Messvorrichtung nach Anspruch 1, **dadurch gekennzeichnet, dass** der Regler (8) als ein mechanischer Regler ausgebildet ist.

4. Verfahren zur Vermessung einer Sitzmatte (10) für einen Fahrzeugsitz, wobei die Sitzmatte (10) einer Druckbelastung zur Aufnahme von Messwerten und/oder zur Durchführung eines Funktionstests ausgesetzt wird, wobei in der Sitzmatte (10) ein Unterdruck zur Erzeugung der Druckbelastung eingestellt wird, wobei ein Differenzdruck zwischen dem Unterdruck in der Sitzmatte (10) und dem Luftdruck in der Umgebung in der Sitzmatte (10) geregelt wird, wobei durch den Differenzdruck eine genaue Einstellung einer Gewichtsbelastung auf die Sitzmatte erfolgt.

5. Verfahren nach Anspruch 4, **dadurch gekennzeichnet, dass** die Vermessung der Sitzmatte (10) in einem Klimaschrank durchgeführt wird.

6. Verfahren nach Anspruch 4 oder 5, **dadurch gekennzeichnet, dass** der Differenzdruck elektronisch eingestellt wird.

7. Verfahren nach Anspruch 4 oder 5, **dadurch gekennzeichnet, dass** der Differenzdruck mechanisch geregelt wird.

## Claims

1. System consisting of a measuring apparatus for measuring a seat mat for a vehicle seat and of a seat mat (10), the seat mat (10) having two films (1, 3) with pressure sensors (4), a plastic layer (2) between the films (1, 3), a ventilation channel (7) and at least one cavity (6), the measuring apparatus having a suction connection (5) for connection to the ventilation channel (7), a pump (9) for generating a negative pressure in the seat mat (10), a controller (8) for setting a differential pressure between the negative pressure in the seat mat (10) and the external air pressure, a recording apparatus (11) for measured values from the pressure sensors (4) and means (12, 13) for optically outputting and/or for storing the measured values, a weight load on the seat mat being accurately set using the differential pressure.

2. Measuring apparatus according to Claim 1, **characterized in that** the controller (8) is in the form of an electronic controller.

3. Measuring apparatus according to Claim 1, **characterized in that** the controller (8) is in the form of a mechanical controller.

4. Method for measuring a seat mat (10) for a vehicle seat, the seat mat (10) being exposed to a pressure load in order to record measured values and/or in order to carry out a function test, a negative pressure being set in the seat mat (10) in order to generate the pressure load, a differential pressure between the negative pressure in the seat mat (10) and the air pressure in the surrounding area being controlled in the seat mat (10), a weight load on the seat mat being accurately set using the differential pressure.

5. Method according to Claim 4, **characterized in that** the seat mat (10) is measured in a climatic chamber.

6. Method according to Claim 4 or 5, **characterized in that** the differential pressure is electronically set.

7. Method according to Claim 4 or 5, **characterized in that** the differential pressure is mechanically controlled.

## Revendications

1. Système constitué d'un dispositif de mesure pour mesurer un coussin de siège d'un siège de véhicule et d'un coussin de siège (10), le coussin de siège (10) présentant deux feuilles (1, 3) avec des capteurs de pression (4), une couche de plastique (2) entre les feuilles (1, 3), un canal de ventilation (7) et au moins une cavité (6), le dispositif de mesure présentant un raccord d'aspiration (5) pour le raccordement au canal de ventilation (7), une pompe (9) pour produire une dépression dans le coussin de siège (10), un régulateur (8) pour ajuster une différence de pression entre la dépression dans le coussin de siège (10) et la pression de l'air extérieur, un dispositif d'enregistrement (11) pour des valeurs de mesure des capteurs de pression (4) et des moyens (12, 13) pour la diffusion optique et/ou pour l'enregistrement des valeurs de mesure, un ajustement précis d'une charge de poids sur le coussin de siège étant effectué grâce à la différence de pression.

2. Dispositif de mesure selon la revendication 1, **caractérisé en ce que** le régulateur (8) est réalisé sous forme de régulateur électronique.

3. Dispositif de mesure selon la revendication 1, **caractérisé en ce que** le régulateur (8) est réalisé sous forme de régulateur mécanique.

4. Procédé pour mesurer un coussin de siège (10) pour un siège de véhicule, le coussin de siège (10) étant soumis à une charge de pression pour enregistrer des valeurs de mesure et/ou pour effectuer un test de fonctionnement, une dépression étant ajustée dans le coussin de siège (10) pour produire la charge de pression, une différence de pression étant régulée dans le coussin de siège (10) entre la dépression dans le coussin de siège (10) et la pression d'air dans l'environnement, un ajustement précis d'une charge de poids sur le coussin de siège étant effectué grâce à la différence de pression.

5. Procédé selon la revendication 4, **caractérisé en ce que** la mesure du coussin de siège (10) est effectuée dans une armoire climatique.

6. Procédé selon la revendication 4 ou 5, **caractérisé en ce que** la différence de pression est ajustée de manière électronique.

7. Procédé selon la revendication 4 ou 5, **caractérisé en ce que** la différence de pression est régulée de manière mécanique.
